(19) Europäisches Patentamt / European Patent Office / Office européen des brevets

(11) **EP 3 070 435 B1**

(12) **FASCICULE DE BREVET EUROPEEN**

(45) Date de publication et mention
de la délivrance du brevet:
**27.06.2018 Bulletin 2018/26**

(21) Numéro de dépôt: **16159907.1**

(22) Date de dépôt: **11.03.2016**

(51) Int Cl.:
*B64D 45/00* (2006.01)    *G01C 23/00* (2006.01)
*G05D 1/06* (2006.01)    *A63G 31/16* (2006.01)
*B64G 7/00* (2006.01)

(54) **PROCÉDÉ ET DISPOSITIF D'AIDE AU PILOTAGE D'UN AÉRONEF LORS D'UN VOL PARABOLIQUE**

VERFAHREN UND VORRICHTUNG ZUR UNTERSTÜTZUNG DER STEUERUNG EINES LUFTSCHIFFS BEI EINEM PARABELFLUG

METHOD AND DEVICE TO ASSIST WITH PILOTING AN AIRCRAFT DURING PARABOLIC FLIGHT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.03.2015 FR 1552208**

(43) Date de publication de la demande:
**21.09.2016 Bulletin 2016/38**

(73) Titulaire: **AIRBUS OPERATIONS (SAS)**
**31060 Toulouse (FR)**

(72) Inventeur: **WALTER, Stéphane**
**31490 BRAX (FR)**

(74) Mandataire: **Gevers & Orès**
**41 avenue de Friedland**
**75008 Paris (FR)**

(56) Documents cités:
**US-A- 5 707 026**    **US-A- 5 971 319**
**US-A1- 2008 078 875**    **US-B1- 8 241 133**

**Description**

**DOMAINE TECHNIQUE**

La présente invention concerne un procédé et un dispositif d'aide au pilotage d'un aéronef lors d'un vol parabolique.

**ETAT DE LA TECHNIQUE**

Bien que non exclusivement, la présente invention s'applique plus particulièrement à un vol parabolique en vue de générer une impesanteur dans l'aéronef. On sait que l'impesanteur correspond à une situation d'absence de pesanteur et représente l'état d'un corps, en particulier d'un corps humain, qui est tel que l'ensemble des forces gravitationnelles et inertielles auxquelles il est soumis possède une résultante et un moment résultant nuls. Il est possible d'obtenir des conditions d'impesanteur, à l'intérieur d'un avion de ligne, en amenant ce dernier sur une trajectoire parabolique.

Plus précisément, un vol parabolique particulier, dit vol « 0g », g étant l'accélération de la pesanteur, permet de générer pendant quelques dizaines de secondes une accélération nulle (dans toutes les directions, bien que l'on considère principalement la direction verticale dans le cadre de la présente invention) et donc les conditions de l'impesanteur dans l'aéronef. Un tel vol est, généralement, assuré avec une tolérance de 5/100e de g autour de 0g.

Un directeur de vol a été développé pour guider les pilotes entre les actions à piquer et à cabrer pendant un tel vol 0g. Ce directeur de vol indique une position recherchée prédéfinie du manche (de commande) pour suivre une trajectoire parabolique à 0g. Cette position prédéfinie du manche est calculée, avant le vol, en fonction de paramètres liés à l'aéronef, tels que la masse, le centrage, l'équilibrage, des paramètres aérodynamiques, la poussée,...

Ce directeur de vol permet uniquement de calculer une estimation de la trajectoire parabolique générant un vol 0g, et ceci pour différentes raisons :

- il n'est pas possible de connaître les différents paramètres de l'aéronef suffisamment précisément pour calculer la trajectoire avec la précision souhaitée ; et
- les facteurs extérieurs à l'aéronef qui influent sur le facteur de charge (par exemple les mouvements de l'air) ne sont pas pris en compte.

Ce directeur de vol indique donc une position du manche qui peut présenter un léger décalage avec la position permettant de réaliser un vol 0g précis. Le pilote est donc également obligé de suivre un indicateur de facteur de charge (g-mètre) en plus de ce directeur de vol, pour réaliser un vol parabolique.

Par ailleurs, on connaît, par le document US-5 971 319, un procédé d'aide au pilotage d'un aéronef lors d'un vol parabolique, à base de système prédictive. Le système calcule le suivi d'une parabole idéale qui correspond aux paramètres mesurés (pression, vitesse, poussée, ...).

**EXPOSÉ DE L'INVENTION**

La présente invention a pour objet de remédier à cet inconvénient. Elle concerne un procédé d'aide au pilotage d'un aéronef lors d'un vol parabolique, par exemple en vue de générer une impesanteur dans l'aéronef, qui permet de fournir une aide précise au pilote de sorte qu'il sache à tout moment, de façon directe et immédiate, à l'aide d'indications fournies par ledit seul procédé, quelle(s) action(s) il doit réaliser pour commander le vol parabolique.

Selon l'invention, ledit procédé d'aide au pilotage d'un aéronef lors d'un vol parabolique, est remarquable en ce qu'il comprend une suite d'étapes, mises en oeuvre de façon automatique et répétitive, lors d'un vol parabolique de l'aéronef et consistant en temps réel :

a) à déterminer au moins un facteur de charge vertical courant de l'aéronef ;

b) à calculer une valeur de directeur de vol à l'aide dudit facteur de charge vertical courant et d'un facteur de charge vertical cible, en appliquant un filtrage audit facteur de charge vertical courant pour atténuer des variations à hautes fréquences et en réalisant une correction pour corriger un décalage temporel généré par le filtrage, le facteur de charge vertical cible étant un facteur de charge vertical souhaité pour l'aéronef lors du vol parabolique, ladite valeur de directeur de vol étant calculée de manière à être égale à une

valeur de référence lorsque le facteur de charge vertical courant devient égal audit facteur de charge vertical cible ; et

c) à présenter, sur au moins une échelle de facteur de charge, affichée sur un écran du poste de pilotage, un premier indicateur représentatif de ladite valeur de directeur de vol, calculée à l'étape b), et un second indicateur indiquant ladite valeur de référence.

Ainsi, grâce à l'invention, la valeur de directeur de vol (qui est telle qu'elle s'annule lorsque l'aéronef est dans une position optimale pour faire voler l'aéronef selon le vol parabolique souhaité, permettant par exemple de créer une impesanteur) est calculée, au cours du vol, en temps réel, et est adaptée à la situation courante de l'aéronef, et notamment à son facteur de charge vertical courant. Cette valeur de directeur de vol est fournie au pilote via ledit premier indicateur, ce qui permet d'indiquer au pilote à tout moment les actions à réaliser sur l'aéronef pour obtenir un pilotage optimal.

Par conséquent, la présente invention fournit une aide au pilote en lui indiquant en temps réel, de façon directe et précise, quelle(s) action(s) il doit mettre en oeuvre sur l'aéronef pour réaliser le vol parabolique recherché via l'indicateur affiché sur l'échelle de facteur de charge.

Un facteur de charge vertical de l'aéronef représente la composante « verticale » du facteur de charge, qui est définie selon une direction faisant partie du plan « vertical » de symétrie de l'aéronef et orthogonale à un plan général des ailes de l'aéronef.

Dans un mode de réalisation préféré, ledit facteur de charge vertical cible (c'est-à-dire le facteur de vol vertical recherché auquel l'aéronef doit être soumis) est nul de manière à générer, comme vol parabolique, un vol 0g.

Toutefois, le procédé précité peut permettre de mettre en oeuvre d'autres vols paraboliques, pour lesquels l'aéronef suit, pendant une certaine durée, une trajectoire parabolique avec un facteur de charge vertical constant (correspondant audit facteur de charge vertical cible) qui n'est pas nul et présente une valeur donnée souhaitée.

On notera que ledit filtrage permet d'atténuer des variations de hautes fréquences pour filtrer des perturbations dues à des turbulences, comme précisé ci-dessous.

De plus, de préférence, ladite correction est réalisée à l'aide d'un terme correcteur qui est proportionnel à une dérivée d'une valeur estimée de facteur de charge.

En outre, dans un mode de réalisation préféré, l'étape b) consiste à calculer ladite valeur de directeur de vol FD, à l'aide de l'expression suivante :

$$FD = K \times \left[ 1 + \frac{Nz}{1 + \tau_1.s} - Nzt + (k_q \times k_1 \times \frac{V_{TAS}}{g} \times \frac{q}{1 + \tau_2.s} \times \frac{\tau_1.s}{1 + \tau_1.s}) \right]$$

dans laquelle :

- K est une constante représentant un facteur d'échelle ;
- Nz est le facteur de charge vertical courant ;
- Nzt est le facteur de charge vertical cible ;
- $V_{TAS}$ est une vitesse vraie courante de l'aéronef ;
- q est une vitesse de tangage courante de l'aéronef ;
- $k_q$ et $k_1$ sont des constantes prédéterminées ; et
- $\tau_1$ et $\tau_2$ sont des constantes de temps.

De préférence, au moins l'une desdites constantes K, $k_q$, $\tau_1$ et $\tau_2$ dépend d'une phase de vol courante de l'aéronef.

La présente invention concerne également un dispositif d'aide au pilotage d'un aéronef lors d'un vol parabolique, en particulier en vue de générer une impesanteur dans l'aéronef.

Selon l'invention, ledit dispositif d'aide au pilotage est remarquable en ce qu'il comporte :

- un ensemble de sources d'informations, configuré pour déterminer automatiquement, en temps réel, au moins un facteur de charge vertical courant de l'aéronef ;
- une unité de calcul configurée pour calculer automatiquement, en temps réel, une valeur de directeur de vol à l'aide dudit facteur de charge vertical courant et d'un facteur de charge vertical cible, le facteur de charge vertical cible étant un facteur de charge vertical souhaité pour l'aéronef lors du vol parabolique, ladite valeur de directeur de vol étant calculée de manière à être égale à une valeur de référence lorsque le facteur de charge vertical courant devient égal audit facteur de charge vertical cible, l'unité de calcul étant configurée pour appliquer un filtrage audit facteur de charge vertical courant afin d'atténuer des variations à hautes fréquences et pour réaliser une correction afin de corriger un décalage temporel généré par le filtrage ; et
- une unité d'affichage configurée pour présenter automatiquement, en temps réel, sur au moins une échelle de facteur de charge, affichée sur un écran du poste de pilotage, un premier indicateur représentatif de ladite valeur de directeur de vol, calculée par ladite unité de calcul, et un second indicateur indiquant ladite valeur de référence.

La présente invention concerne également un système de pilotage manuel d'un aéronef, comprenant au moins un manche apte à être actionné par un pilote pour modifier sa position et configuré pour agir sur au moins une gouverne de profondeur afin de générer un pilotage de l'aéronef sur l'axe de tangage en fonction de la position dudit manche, ledit système de pilotage manuel comprenant de plus au moins un dispositif d'aide au pilotage tel que celui précité.

La présente invention concerne en outre un aéronef, en particulier un avion de transport, qui est pourvu d'un tel dispositif d'aide au pilotage et/ou d'un tel système de pilotage manuel.

## BRÈVE DESCRIPTION DES FIGURES

Les figures annexées feront bien comprendre comment l'invention peut être réalisée. Sur ces figures, des références identiques désignent des éléments semblables.

La figure 1 est le schéma synoptique d'un dispositif d'aide au pilotage d'un aéronef qui illustre un mode de réalisation de l'invention.

La figure 2 montre schématiquement un système de pilotage manuel comprenant un dispositif d'aide au pilotage.

La figure 3 illustre schématiquement un exemple d'affichage, susceptible d'être réalisé par un dispositif d'aide au pilotage.

La figure 4 est un graphique illustrant la variation du facteur de charge vertical en fonction du temps lors d'un vol parabolique, qui permet de mettre en évidence l'effet obtenu par le filtrage sur des variations à hautes fréquences.

La figure 5 montre, de façon agrandie, une partie du graphique de la figure 4.

## DESCRIPTION DÉTAILLÉE

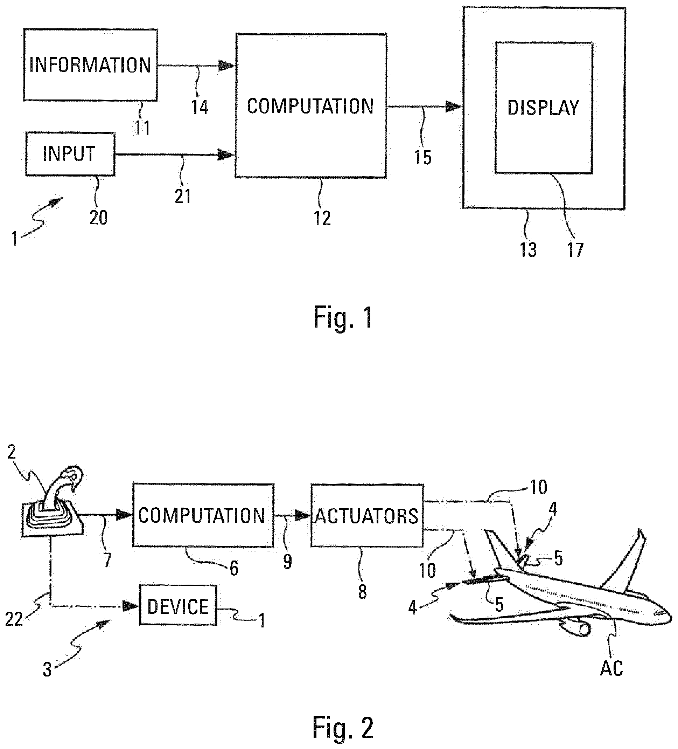

Le dispositif 1 représenté schématiquement sur la figure 1 et permettant d'illustrer l'invention, est destiné à aider au pilotage d'un aéronef AC (figure 2), notamment d'un avion de transport civil, lors d'un vol parabolique, en particulier dans le but de générer une impesanteur dans l'aéronef AC.

Par vol parabolique, on entend un vol au cours duquel on amène l'aéronef AC sur une trajectoire usuelle de forme générale parabolique, permettant d'obtenir un facteur de charge constant à l'intérieur dudit aéronef AC, pendant une certaine durée, généralement de l'ordre d'une vingtaine de secondes. De préférence, bien que non exclusivement, le facteur de charge recherché est nul de manière à obtenir une situation d'impesanteur.

Le calcul d'une trajectoire parabolique, permettant par exemple de créer des conditions d'impesanteur, est connu et n'est pas présenté davantage dans la présente description.

Le dispositif 1 est utilisé lors d'un vol réalisé manuellement par un pilote en agissant notamment sur un manche 2 usuel de l'aéronef AC, faisant partie d'un système de pilotage manuel 3.

Comme représenté de façon schématique et très générale sur la figure 2, ce système de pilotage manuel 3 comprend :

- le manche 2 usuel qui est apte à être actionné (en étant déplacé (pivoté) vers l'avant ou vers l'arrière) par un pilote pour modifier sa position (c'est-à-dire sa déflexion) et qui est configuré pour agir sur des gouvernes de profondeur 4 de l'aéronef AC, agencées sur les empennages horizontaux 5 de l'aéronef AC, dans le but de générer un pilotage de l'aéronef AC sur l'axe de tangage ;
- un calculateur 6 (« COMPUTATION ») qui calcule, de façon usuelle, en fonction de la position du manche 2 (exprimée par un angle de déflexion) reçue par l'intermédiaire d'une liaison 7, un ordre de commande qui est transmis via une liaison 9 à un ensemble 8 d'actionneurs (« ACTUATORS ») associés aux gouvernes de profondeur 4 de l'aéronef AC ; et
- lesdites gouvernes de profondeur 4 qui sont braquées par l'action des actionneurs associés, comme indiqué schématiquement par des flèches 10 en traits mixtes sur la figure 2.

Bien que le système de pilotage 3 soit représenté à l'extérieur de l'aéronef AC sur cette figure 2 pour des raisons de simplification du dessin, il est bien entendu embarqué sur ce dernier.

Dans le cadre de la présente invention, le système de pilotage considéré peut correspondre à un système à commandes de vol électriques, comme représenté sur la figure 2, ou à un système à commandes de vol mécaniques.

Selon l'invention, ledit dispositif 1 (« DEVICE ») d'aide au pilotage qui est également embarqué sur l'aéronef AC et qui fait par exemple partie du système de pilotage manuel 3 (figure 2) comporte, comme représenté sur la figure 1 :

- un ensemble 11 de sources d'informations (« INFORMATION »), qui est configuré pour déterminer automatiquement, en temps réel, au moins un facteur de charge vertical courant (ci-après « facteur de charge courant ») de l'aéronef ;

- une unité de calcul 12 ("COMPUTATION") configurée pour calculer automatiquement, en temps réel, une valeur de directeur de vol FD à l'aide dudit facteur de charge courant (reçu de l'ensemble 11 via une liaison 14) et d'un facteur de charge vertical cible (ci-après « facteur de charge cible »). Le facteur de charge cible est le facteur de charge vertical souhaité (ou recherché) pour l'aéronef lors du vol parabolique. La valeur de directeur de vol FD est calculée de manière à être égale à une valeur de référence de directeur de vol (en général égale à zéro) lorsque le facteur de charge courant devient égal audit facteur de charge cible, comme précisé ci-dessous ; et
- une unité d'affichage 13 qui est reliée par l'intermédiaire d'une liaison 15 à l'unité de calcul 12.

Au sens de la présente invention, un directeur de vol est donc une valeur représentative de grandeurs physiques liées à l'aéronef, qui est indiquée au pilote en temps réel. Une action du pilote sur les commandes de l'aéronef lui permet de modifier cette valeur, afin de la rendre égale à sa valeur de référence. Quand la valeur courante du directeur de vol est égale à sa valeur de référence, l'aéronef est piloté selon la trajectoire souhaitée. Le pilote peut donc piloter son aéronef en concentrant son attention sur cette valeur de directeur de vol, et en agissant sur les commandes de l'aéronef pour amener la valeur courante du directeur de vol à sa valeur de référence (en pratique égale à zéro).

Dans la présente description, la valeur courante du directeur de vol est notée FD, et la valeur de référence du directeur de vol est égale à zéro.

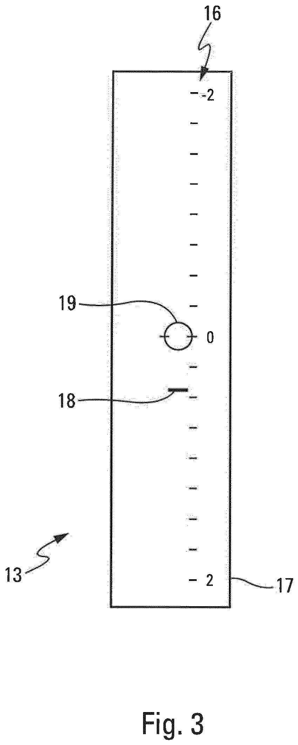

L'unité d'affichage 13 (« DISPLAY ») comprend au moins un écran 17 installé dans le poste de pilotage de l'aéronef AC, et elle est configurée pour présenter sur au moins une échelle 16 de valeur de directeur de vol, qui est affichée sur l'écran 17, comme représenté sur la figure 3, un indicateur 18 représentatif de ladite valeur de directeur de vol FD, calculée par l'unité de calcul 12.

Dans un mode de réalisation préféré, quand la valeur cible de facteur de charge est de 0g, la valeur de directeur de vol FD est une valeur proche du facteur de charge. L'unité d'affichage 13 permet ainsi au pilote de visualiser à la fois la valeur courante du directeur de vol par rapport à la valeur cible de directeur de vol, et une valeur approchée de la valeur courante du facteur de charge par rapport à la valeur cible de facteur de charge (Og).

Dans un mode de réalisation préféré, représenté sur la figure 3, l'échelle 16 est affichée de façon verticale. L'indicateur 18 est affiché sur cette échelle verticale 16 qui affiche également un indicateur 19 fixe, qui illustre la valeur de référence du directeur de vol (qui est donc nulle dans cet exemple). Un autre type d'affichage de l'échelle et des indicateurs est également possible.

L'indicateur 18 et l'indicateur 19 sont représentés, par exemple, sous forme de barrette ou de cercle, ou de tout autre élément graphique, et présentent des formes et/ou des couleurs identiques ou différentes. De plus, l'échelle 16 peut être graduée (comme représenté sur la figure 3 où elle est graduée selon une valeur exprimée en g) ou non.

Ainsi, grâce au dispositif 1, la valeur de directeur de vol FD (qui est telle qu'elle s'annule lorsque les gouvernes 4 de l'aéronef AC sont dans une position optimale pour faire voler l'aéronef AC selon un vol parabolique recherché, permettant par exemple de créer une impesanteur) est calculée en temps réel au cours du vol, et est adaptée à la situation courante de l'aéronef AC, et notamment à son facteur de charge (vertical) courant. Cette valeur de directeur de vol FD est fournie au pilote via l'indicateur 18 qui indique ainsi, à tout moment, l'action à réaliser (via le manche 2) pour annuler la valeur FD (c'est-à-dire la rendre égale à la valeur de référence du directeur de vol) et ainsi réaliser un pilotage optimal de l'aéronef AC.

Par conséquent, le dispositif 1 fournit une aide au pilote en lui indiquant en temps réel, de façon directe et précise, quelle(s) action(s) il doit appliquer, notamment sur le manche 2, pour réaliser le vol parabolique souhaité.

Par ailleurs, le dispositif 1 comprend une unité de saisie de données 20 (« INPUT ») qui permet à un opérateur, en particulier un pilote de l'aéronef, d'entrer des données dans le dispositif 1, et en particulier dans l'unité de calcul 12 (via une liaison 21). Cette unité de saisie de données 20 peut correspondre à tout moyen usuel (boule de commande, écran tactile, clavier,...) permettant de saisir des données.

L'ensemble 11 de sources d'informations qui fournit des informations à l'unité de calcul 12, via la liaison 14, et notamment les valeurs courantes de paramètres de l'aéronef AC, comprend en particulier une centrale inertielle et une centrale anémobarométrique de type ADC (pour « Air Data Computer » en anglais), comme précisé ci-dessous.

Dans un mode de réalisation préféré, l'unité de calcul 12 comprend des éléments de calcul (intégrés et non représentés) pour calculer ladite valeur de facteur de charge FD (pour « Flight Director » en anglais), à l'aide de l'expression suivante :

$$FD = K \times \left[ 1 + \frac{Nz}{1 + \tau_1.s} - Nzt + \left( k_q \times k_1 \times \frac{V_{TAS}}{g} \times \frac{q}{1 + \tau_2.s} \times \frac{\tau_1.s}{1 + \tau_1.s} \right) \right]$$

dans laquelle :

- K est une constante représentant un facteur d'échelle, qui est choisie de façon à offrir une bonne visualisation de la valeur FD par le pilote ;
- Nz est le facteur de charge courant, qui est fourni par la centrale inertielle faisant partie de l'ensemble 11 de sources d'informations ;
- Nzt est le facteur de charge cible, qui est nul pour un vol Og ;
- $V_{TAS}$ est une vitesse vraie courante (« True Air Speed » en anglais) de l'aéronef AC, qui est fournie par la centrale anémobarométrique faisant partie de l'ensemble 11 de sources d'informations ;
- q est une vitesse de tangage courante de l'aéronef AC, qui est fournie par la centrale inertielle (faisant partie de l'ensemble 11 de sources d'informations) ;
- $k_q$ et $k_1$ sont des constantes prédéterminées, dépendant des unités dans lesquelles sont données les informations fournies par l'ensemble 11 de source d'informations ; et
- $\tau_1$ et $\tau_2$ sont des constantes de temps.

Comme précisé ci-dessous :

- $\tau_1$ intervient dans le filtrage du facteur de charge vertical en cas de turbulences. Cette constante de temps reste normalement inférieure ou égale à 1 seconde. En effet, il a été constaté qu'une constante trop élevée (supérieure à 1) génère un filtrage trop fort qui éloigne trop la valeur FD de la valeur réelle du facteur de charge. Au contraire, une valeur de filtrage trop faible (par exemple inférieure à 0,5 seconde) ne permet pas un filtrage suffisant des turbulences. Le choix précis de la valeur de cette constante est fait en fonction du niveau de turbulences subies par l'aéronef ; et
- $\tau_2$ intervient dans la correction d'un décalage temporel généré par le filtrage du facteur de charge vertical. Cette constante de temps est choisie proche de la valeur de $\tau_2$ pour le vol de croisière de l'aéronef, qui est déterminée par les équations de mécanique du vol. Elle est, par exemple, égale à 1,5 seconde.

Les constantes K, $k_q$, $\tau_1$ et $\tau_2$ peuvent dépendre de la phase de vol courante de l'aéronef AC.

Pour filtrer les perturbations liées aux turbulences, l'unité de calcul 12 filtre la valeur $N_z$ du facteur de charge (l'indice z illustre la composante verticale) donnée par la centrale inertielle. La valeur filtrée est $\dfrac{Nz}{1+\tau_1.s}$ (qui est une représentation de Laplace du filtre avec $\tau_1$ la constante de temps du filtre et s une dérivée).

Comme indiqué ci-dessus, le filtrage peut être, par exemple, à 1 seconde. Une valeur de $\tau_1$ entre 0,5 seconde et 1 seconde peut également être envisageable.

Ce filtrage atténue les oscillations des turbulences, mais crée un décalage temporel de $\dfrac{Nz}{1+\tau_1.s}$ par rapport à Nz.

Pour corriger le décalage temporel généré par le filtre, l'unité de calcul 12 génère une avance de phase en combinant la valeur du facteur de charge Nz filtrée avec une dérivée d'une valeur estimée de facteur de charge.

La valeur estimé $\hat{N}z$ de facteur de charge est calculée à l'aide des équations de la mécanique du vol, à partir de l'expression suivante :

$$\hat{N}z = \frac{V_{TAS}}{g} \times \frac{q}{1+\tau_2.s}$$

dans laquelle :

- $V_{TAS}$ est la vitesse vraie courante de l'aéronef, exprimée en m/s et reçue de l'ensemble 11 via la liaison 14 ;
- q est la vitesse de tangage courante de l'aéronef, exprimée en rad/s et reçue également de l'ensemble 11 via la liaison 14 ; et
- $\dfrac{q}{1+\tau_2.s}$ est la vitesse de tangage filtrée. Le choix de la constante de temps est un réglage qui est adapté à la situation considérée, par exemple 2,5 secondes ou 1,5 seconde.

En utilisant, dans l'expression précitée de la valeur estimée $\hat{N}z$, des noeuds à la place de mètres/seconde (à savoir un rapport de 0,5144) et des degrés à la place de radians (à savoir un rapport de 57,3), la valeur estimée $\hat{N}z$ devient :

$$\hat{N}z = \frac{V_{TAS}}{g} \times \frac{q}{1 + \tau_2.s} \times k_1$$

dans laquelle $k_1 = \dfrac{0,5144}{57,3}$ .

Pour générer une avance de phase (pour les mouvements à basses fréquences uniquement), l'unité de calcul 12 calcule la dérivée de cette valeur estimée $\hat{N}z$ :

$$k_q \times \hat{N}z \times \frac{\tau_1.s}{1 + \tau_1.s}$$

avec $k_q$ un gain, qui est compris entre 0,5 et 1. Ce gain est fixé de manière empirique, en fonction de résultats de simulateurs, une valeur trop faible ne permettant pas la correction du retard, et une valeur trop élevée entraînant un décalage avec la valeur vraie en fin d'une phase de vol parabolique.

Lors de la phase de décélération (passage rapide de 1,8g à 0g), une avance de phase importante est utile pour éviter de dépasser le vol 0g, ce qui suppose par exemple un gain $k_q$ proche de 1 ou égal à 1. Au contraire, lors de la phase de maintien de vol 0g, il est préférable d'avoir une avance de phase plus faible, ce qui suppose par exemple un gain $k_q$ proche de 0,5 ou égal à 0,5.

La valeur dérivée du facteur de charge est ainsi calculée (à partir des équations de la mécanique du vol), à l'aide de données (la vitesse de tangage q) fournies par la centrale inertielle et de données (la vitesse vraie $V_{TAS}$) fournies par la centrale anémobarométrique.

Le dispositif 1 réalise ainsi un filtrage des turbulences, et il supprime des effets inverses indésirables, quand le pilote agit sur le manche 2.

On sait que les turbulences génèrent des oscillations à hautes fréquences (bruit) du facteur de charge. Si le pilote essaie de corriger ces oscillations, en tentant simplement de maintenir le facteur de charge à 0g, ses actions sont nécessairement décalées temporellement par rapport aux variations de facteur de charge, ce qui entretient, voire accentue, les oscillations. Ce décalage temporel est amplifié par un effet inverse d'une action du pilote. En effet :

- une action à cabrer pour corriger une perte de facteur de charge, entraîne brièvement (pendant environ une seconde) une perte de portance et donc une perte supplémentaire de facteur de charge, avant que le cabrage génère une augmentation du facteur de charge ; et
- une action à piquer entraîne d'abord une augmentation de la portance et donc une augmentation du facteur de charge, ce qui est contraire à la diminution de facteur de charge souhaitée.

Le dispositif 1 permet de remédier à cet inconvénient en affichant un indicateur 18 qui indique au pilote une valeur approchée appropriée du facteur de charge courant réel (mesuré par la centrale inertielle). Pour obtenir cette valeur approchée, la valeur réelle du facteur de charge courant a subi deux corrections :

- un filtrage permettant d'atténuer les variations à hautes fréquences (par exemple un filtrage à 1 seconde permettant de filtrer les variations dues aux turbulences) ; et
- une correction du retard du signal, généré par le filtrage.

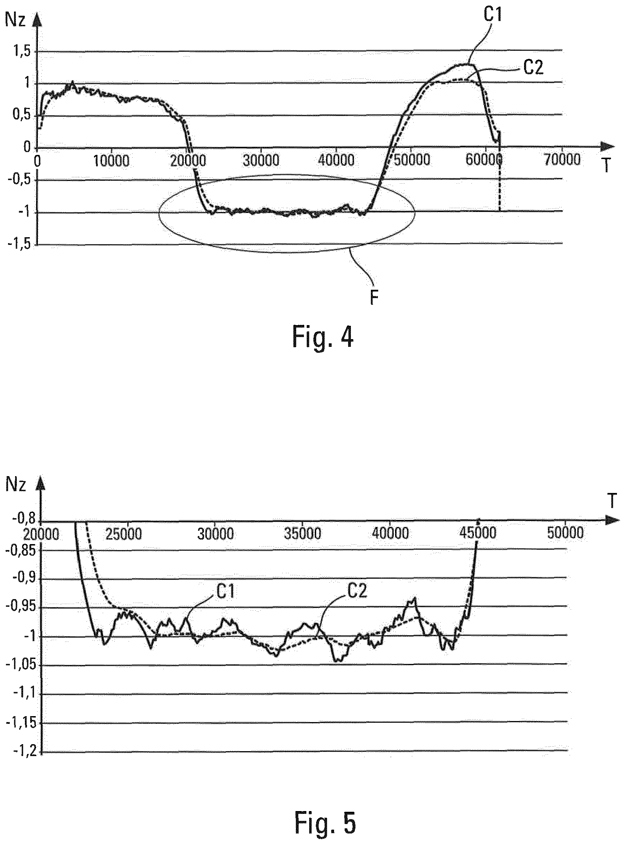

Les figures 4 et 5 permettent de mettre en évidence l'atténuation de perturbations liées à des turbulences, telle qu'obtenue par le dispositif 1. Ces figures 4 et 5 sont des graphiques illustrant la variation du facteur de charge vertical Nz (exprimé en g) en fonction du temps T (exprimé en millisecondes), à l'exemple de deux courbes C1 et C2. C1 illustre la variation du facteur de charge généré sur l'aéronef pour un vol parabolique présentant des turbulences de valeurs relativement faibles, et C2 illustre la variation de facteur de charge pour la valeur de facteur de charge FD (après filtrage et correction) dans une situation similaire. En particulier, sur la figure 5 qui montre de façon agrandie une partie F de la figure 4, l'effet du filtrage des perturbations obtenu par le calcul de FD est bien visible.

La valeur de directeur de vol FD, telle qu'affichée, est donc fournie par l'équation précitée :

$$FD = K \times \left[ 1 + \frac{Nz}{1 + \tau_1.s} - Nzt + (k_q \times k_1 \times \frac{V_{TAS}}{g} \times \frac{q}{1 + \tau_2.s} \times \frac{\tau_1.s}{1 + \tau_1.s}) \right]$$

dans laquelle :

- Nzt est la valeur de facteur de charge recherchée, qui est nulle pour un vol 0g ; et
- K un facteur d'échelle pour zoomer plus ou moins l'affichage réalisé sur l'écran 17.

Les coefficients $k_q$ et K peuvent être choisis avec des valeurs différentes pour les différentes phases du vol, à savoir pour un vol 0g :

- une phase de décélération (passage rapide de 1,8g à 0g) ; et
- une phase de maintien de 0g.

Cette différence se traduit par deux affichages différents de la valeur FD, avec un faible écart dû aux coefficients différents :

- un affichage avec une petite échelle (graduée par exemple entre 2,5g et - 2,5g) pour les phases de décélération et d'accélération ; et
- un affichage avec une grande échelle (graduée par exemple entre 0,1g et - 0,1g) pour la phase de maintien de 0g.

Le fonctionnement du dispositif 1, tel que décrit ci-dessus, est le suivant. Lors d'un vol parabolique, l'unité de calcul 12 calcule en temps réel, en fonction de la situation réelle de l'aéronef, la valeur de directeur de vol FD, qui est affichée sur l'écran 17 via l'indicateur 18. La technique de pilotage mise en oeuvre par le pilote est alors simple. Le pilote agit sur l'aéronef, en particulier sur le manche 2, pour amener l'indicateur 18 au niveau (à la même hauteur pour une échelle verticale 16) de la position de l'indicateur 19 fournissant la valeur de référence (qui est nulle dans l'exemple considéré), c'est-à-dire pour amener (et maintenir) la valeur de directeur de vol FD à zéro. En agissant ainsi pour maintenir la valeur de directeur de vol FD à 0, le pilote maintient l'aéronef sur la trajectoire recherchée pour le vol parabolique, avec un facteur de charge vertical égal au facteur de charge cible, par exemple à 0g, sans pour autant réagir à toutes les perturbations générées par les turbulences (en raison du filtrage précité réalisé).

Dans le mode de réalisation décrit ci-dessus, le calcul de la valeur de directeur de vol FD est réalisé en utilisant des constantes, notamment K, $k_q$, $\tau_1$ et $\tau_2$. Ces constantes peuvent également, dans d'autres modes de réalisation de l'invention, être variables au cours du vol de l'aéronef, par exemple pour s'adapter au mieux aux différentes phases de vol de l'aéronef.

Le dispositif 1, tel que décrit ci-dessus, présente ainsi notamment les avantages suivants :

- il réalise un filtrage des turbulences ;
- il supprime les effets inverses indésirables, quand le pilote agit sur le manche 2 ;
- le dispositif 1 peut être appliqué à tout type d'aéronef. Il ne dépend pas de l'aéronef et ses caractéristiques. Des caractéristiques spécifiques à l'aéronef ne sont, en effet, pas pris en compte dans le calcul de la valeur de directeur de vol FD ;
- la valeur de directeur de vol FD prend en compte le facteur de charge réellement ressenti par l'aéronef (boucle fermée), en tenant compte de facteurs tels que les mouvements de l'air (excepté les oscillations à hautes fréquences) ;
- le dispositif 1 permet de réaliser des vols 0g, mais également des vols paraboliques avec une valeur de g constante différente de 0g ; et
- pour réaliser le pilotage, le pilote doit uniquement suivre un seul indicateur, à savoir l'indicateur 18 sur l'écran 17.

**Revendications**

1. Procédé d'aide au pilotage d'un aéronef lors d'un vol parabolique, **caractérisé en ce qu'**il comprend une suite d'étapes, mises en oeuvre de façon automatique et répétitive, lors d'un vol parabolique de l'aéronef (AC) et consistant en temps réel :

   a) à déterminer au moins un facteur de charge vertical courant de l'aéronef (AC) ;

b) à calculer une valeur de directeur de vol à l'aide dudit facteur de charge vertical courant et d'un facteur de charge vertical cible, en appliquant un filtrage audit facteur de charge vertical courant pour atténuer des variations à hautes fréquences et en réalisant une correction pour corriger un décalage temporel généré par le filtrage, le facteur de charge vertical cible étant un facteur de charge vertical souhaité pour l'aéronef (AC) lors du vol parabolique, ladite valeur de directeur de vol étant calculée de manière à être égale à une valeur de référence lorsque le facteur de charge vertical courant devient égal audit facteur de charge vertical cible ; et

c) à présenter, sur au moins une échelle (16) de facteur de charge, affichée sur un écran (17) du poste de pilotage, un premier indicateur (18) représentatif de ladite valeur de directeur de vol, calculée à l'étape b), et un second indicateur (19) indiquant ladite valeur de référence.

2. Procédé selon la revendication 1,
   **caractérisé en ce que** ledit facteur de charge vertical cible est nul.

3. Procédé selon l'une des revendications 1 et 2,
   **caractérisé en ce que** ladite correction est réalisée à l'aide d'un terme correcteur qui est proportionnel à une dérivée d'une valeur estimée de facteur de charge.

4. Procédé selon l'une quelconque des revendications précédentes,
   **caractérisé en ce que** l'étape b) consiste à calculer ladite valeur de directeur de vol FD, à l'aide de l'expression suivante :

$$FD = K \times \left[ 1 + \frac{Nz}{1 + \tau_1.s} - Nzt + (k_q \times k_1 \times \frac{V_{TAS}}{g} \times \frac{q}{1 + \tau_2.s} \times \frac{\tau_1.s}{1 + \tau_1.s}) \right]$$

dans laquelle :

- K est une constante représentant un facteur d'échelle ;
- Nz est le facteur de charge vertical courant ;
- Nzt est le facteur de charge vertical cible ;
- $V_{TAS}$ est une vitesse vraie courante de l'aéronef (AC) ;
- q est une vitesse de tangage courante de l'aéronef (AC) ;
- $k_q$ et $k_1$ sont des constantes prédéterminées ; et
- $\tau_1$ et $\tau_2$ sont des constantes de temps.

5. Procédé selon la revendication 4,
   **caractérisé en ce qu'**au moins l'une desdites constantes K, $k_q$, $\tau 1$ et $\tau 2$ dépend d'une phase de vol courante de l'aéronef (AC).

6. Dispositif d'aide au pilotage d'un aéronef lors d'un vol parabolique,
   **caractérisé en ce qu'**il comporte :

   - un ensemble (11) de sources d'informations, configuré pour déterminer automatiquement, en temps réel, au moins un facteur de charge vertical courant de l'aéronef (AC) ;
   - une unité de calcul (12) configurée pour calculer automatiquement, en temps réel, une valeur de directeur de vol à l'aide dudit facteur de charge vertical courant et d'un facteur de charge vertical cible, le facteur de charge vertical cible étant un facteur de charge vertical souhaité pour l'aéronef (AC) lors du vol parabolique, ladite valeur de directeur de vol étant calculée de manière à être égale à une valeur de référence lorsque le facteur de charge vertical courant devient égal audit facteur de charge vertical cible, l'unité de calcul (12) étant configurée pour appliquer un filtrage audit facteur de charge vertical courant afin d'atténuer des variations à hautes fréquences et pour réaliser une correction afin de corriger un décalage temporel généré par le filtrage ; et
   - une unité d'affichage (13) configurée pour présenter automatiquement, en temps réel, sur au moins une échelle (16) de facteur de charge, affichée sur un écran (17) du poste de pilotage, un premier indicateur (18) représentatif de ladite valeur de directeur de vol, calculée par ladite unité de calcul (12), et un second indicateur (19) indiquant ladite valeur de référence.

7. Système de pilotage manuel d'un aéronef, ledit système de pilotage manuel (3) comprenant au moins un manche (2) apte à être actionné par un pilote pour modifier sa position et configuré pour agir sur au moins une gouverne de profondeur (4) afin de générer un pilotage de l'aéronef AC sur l'axe de tangage en fonction de la position dudit manche (2),

**caractérisé en ce qu'**il comporte, de plus, au moins un dispositif d'aide au pilotage (1) tel que celui spécifié sous la revendications 6.

8. Aéronef,
   **caractérisé en ce qu'**il comporte au moins un dispositif d'aide au pilotage (1) tel que celui spécifié sous la revendication 6.

**Patentansprüche**

1. Verfahren zur Unterstützung der Steuerung eines Luftschiffs bei einem Parabelflug, **dadurch gekennzeichnet, dass** es eine Reihe von Schritten umfasst, die bei einem Parabelflug des Luftschiffs (AC) automatisch und wiederholt durchgeführt werden und in Echtzeit ablaufen:

   a) zum Bestimmen mindestens eines aktuellen vertikalen Lastfaktors des Luftschiffs (AC);
   b) zum Berechnen eines Flugrichtungswertes unter Verwendung des aktuellen vertikalen Lastfaktors und eines vertikalen Ziellastfaktors, durch Durchführen einer Filterung auf den aktuellen vertikalen Lastfaktor, um Hochfrequenzschwankungen zu dämpfen, und durch Durchführen einer Korrektur zum Korrigieren eines durch Filterung erzeugten Zeitversatzes, wobei der vertikale Ziellastfaktor ein gewünschter vertikaler Lastfaktor für das Luftschiff (AC) beim Parabelflug ist, wobei der Flugrichtungswert derart berechnet wird, dass er gleich einem Bezugswert ist, wenn der aktuelle vertikale Lastfaktor gleich dem vertikalen Solllastfaktor wird; und
   c) zum Anzeigen auf mindestens einer Lastfaktorskala (16), die auf einem Cockpit-Bildschirm (17) angezeigt wird, eines ersten Indikators (18), der den in Schritt b) berechneten Flugrichtungswert wiedergibt, und eines zweiten Indikators (19), der den Bezugswert anzeigt.

2. Verfahren nach Anspruch 1, **dadurch gekennzeichnet, dass** der vertikale Solllastfaktor Null ist.

3. Verfahren nach einem der Ansprüche 1 und 2, **dadurch gekennzeichnet, dass** die Korrektur unter Verwendung eines Korrekturterms durchgeführt wird, der proportional zu einer Ableitung eines Wertes des geschätzten Lastfaktors ist.

4. Verfahren nach einem der vorstehenden Ansprüche, **dadurch gekennzeichnet, dass** Schritt b) darin besteht, den Flugrichtungswert FD unter Verwendung der folgenden Formel zu berechnen,

$$ FD = K \times \left[ 1 + \frac{Nz}{1 + \tau_1.s} - Nzt + \left( k_q \times k_1 \times \frac{V_{TAS}}{g} \times \frac{q}{1 + \tau_2.s} \times \frac{\tau_1.s}{1 + \tau_1.s} \right) \right] $$

   wobei:

   - K eine Konstante ist, die für einen Skalierungsfaktor steht;
   - Nz der aktuelle vertikale Lastfaktor ist;
   - Nzt der vertikale Solllastfaktor ist;
   - $V_{TAS}$ eine aktuelle wahre Fluggeschwindigkeit des Luftschiffs (AC) ist;
   - q eine aktuelle Nickgeschwindigkeit des Luftschiffs (AC) ist;
   - $k_q$ und $k_1$ vorgegebene Konstanten sind; und
   - $\tau_1$ und $\tau_2$ Zeitkonstanten sind.

5. Verfahren nach Anspruch 4, **dadurch gekennzeichnet, dass** mindestens eine der Konstanten K, $k_q$, $\tau$1 und $\tau$2 von einer aktuellen Flugphase des Luftschiffs (AC) abhängt.

6. Vorrichtung zur Unterstützung der Steuerung eines Luftschiffs bei einem Parabelflug, **dadurch gekennzeichnet, dass** sie Folgendes umfasst:

- einen Satz (11) von Informationsquellen, der dazu konfiguriert ist, in Echtzeit automatisch mindestens einen aktuellen vertikalen Lastfaktor des Luftschiffs (AC) zu bestimmen;

- eine Recheneinheit (12), die dazu konfiguriert ist, in Echtzeit automatisch einen Flugrichtungswert unter Verwendung des aktuellen vertikalen Lastfaktors und eines vertikalen Solllastfaktors zu berechnen, wobei der vertikale Solllastfaktor ein gewünschter vertikaler Lastfaktor für das Luftschiff (AC) beim Parabelflug ist, der Flugrichtungswert derart berechnet wird, dass er gleich einem Bezugswert ist, wenn der aktuelle vertikale Lastfaktor gleich dem vertikalen Solllastfaktor wird, wobei die Recheneinheit (12) dazu konfiguriert ist, eine Filterung auf den aktuellen vertikalen Lastfaktor anzuwenden, um Hochfrequenzschwankungen zu dämpfen und eine Korrektur durchzuführen, um einen durch die Filterung erzeugten Zeitversatz zu korrigieren; und

- eine Anzeigeeinheit (13), die dazu konfiguriert ist, auf mindestens einer Lastfaktorskala (16), die auf einem Cockpit-Bildschirm (17) angezeigt wird, einen ersten Indikator (18), der den von der Recheneinheit (12) berechneten Flugrichtungswert darstellt, und einen zweiten Indikator (19), der den Bezugswert anzeigt, automatisch in Echtzeit anzuzeigen.

**7.** Manuelles Steuerungssystem für ein Flugzeug, wobei das manuelle Steuerungssystem (3) mindestens einen Steuerknüppel (2) umfasst, der von einem Piloten betätigt werden kann, um seine Position zu ändern, und dazu konfiguriert ist, auf mindestens ein Höhenruder (4) zu wirken, um eine Steuerung des Luftschiffs AC auf der Nickachse in Abhängigkeit von der Position des Steuerknüppels (2) zu erzeugen, **dadurch gekennzeichnet, dass** es weiter mindestens eine Vorrichtung zur Unterstützung der Steuerung (1) umfasst, wie unter Anspruch 6 spezifiziert.

**8.** Luftschiff, das **dadurch gekennzeichnet ist, dass** es mindestens eine Vorrichtung zur Unterstützung der Steuerung (1), wie unter Anspruch 6 spezifiziert, enthält.

**Claims**

**1.** A method for assisting in the piloting of an aircraft in a parabolic flight,
**characterized in that** it comprises a series of steps, implemented automatically and repetitively, in a parabolic flight of the aircraft (AC) and consisting in real time:

a) in determining at least one current vertical load factor of the aircraft (AC);

b) in computing a flight director value using said current vertical load factor and a target vertical load factor, by applying a filtering to said current vertical load factor to attenuate variations at high frequencies and by performing a correction to correct a time offset generated by the filtering, the target vertical load factor being a vertical load factor desired for the aircraft (AC) in the parabolic flight, said flight director value being computed in such a way as to be equal to a reference value when the current vertical load factor becomes equal to said target vertical load factor; and

c) in presenting, on at least one load factor scale (16), displayed on a screen (17) of the cockpit, a first indicator (18) representative of said flight director value, computed in the step b), and a second indicator (19) indicating said reference value.

**2.** The method as claimed in claim 1,
**characterized in that** said target vertical load factor is nil.

**3.** The method as claimed in any of claims 1 and 2,
**characterized in that** said correction is performed using a correcting term which is proportional to a derivative of an estimated load factor value.

**4.** The method as claimed in claim 1,
**characterized in that** the step b) consists in computing said flight director value FD, using the following expression:

$$FD = K \times \left[ 1 + \frac{Nz}{1 + \tau_1.s} - Nzt + (k_q \times k_1 \times \frac{V_{TAS}}{g} \times \frac{q}{1 + \tau_2.s} \times \frac{\tau_1.s}{1 + \tau_1.s}) \right]$$

in which:

- K is a constant representing a scale factor;
- Nz is the current vertical load factor;
- Nzt is the target vertical load factor;
- $V_{TAS}$ is a current true speed of the aircraft (AC);
- q is a current pitch speed of the aircraft (AC);
- $k_q$ and $k_1$ are predetermined constants; and
- $\tau_1$ and $\tau_2$ are time constants.

5. The method as claimed in claim 4,
**characterized in that** at least one of said constants K, $k_q$, $\tau1$ and $\tau2$ depends on a current flight phase of the aircraft (AC).

6. A device for assisting in the piloting of an aircraft in a parabolic flight,
**characterized in that** it comprises:

- a set (11) of information sources, configured to determine automatically, in real time, at least one current vertical load factor of the aircraft (AC);
- a computation unit (12) configured to compute automatically, in real time, a flight director value using said current vertical load factor and a target vertical load factor, the target vertical load factor being a vertical load factor desired for the aircraft (AC) in the parabolic flight, said flight director value being computed in such a way as to be equal to a reference value when the current vertical load factor becomes equal to said target vertical load factor, the computation unit (12) being configured to apply a filtering to said current vertical load factor in order to attenuate variations at high frequencies and to perform a correction in order to correct a time offset generated by the filtering; and
- a display unit (13) configured to present automatically, in real time, on at least one load factor scale (16), displayed on a screen (17) of the cockpit, a first indicator (18) representative of said flight director value, computed by said computation unit (12), and a second indicator (19) indicating said reference value.

7. A manual piloting system of an aircraft, said manual piloting system (3) comprising at least one control column (2) suitable for being actuated by a pilot to modify its position and configured to act on at least one elevator (4) in order to generate a piloting of the aircraft (AC) on the pitch axis as a function of the position of said control column (2), **characterized in that** it also comprises at least one piloting assistance device (1) such as that specified under claim 6.

8. An aircraft,
wherein it comprises at least one piloting assistance device (1) such as that specified under claim 6.

Fig. 1

Fig. 2

Fig. 3

Fig. 4

Fig. 5

**EP 3 070 435 B1**

## RÉFÉRENCES CITÉES DANS LA DESCRIPTION

**Documents brevets cités dans la description**

- US 5971319 A